Europäisches Patentamt

European Patent Office

Office européen des brevets

(19)

(11) **EP 1 306 269 B1**

(12) **EUROPÄISCHE PATENTSCHRIFT**

(45) Veröffentlichungstag und Bekanntmachung des Hinweises auf die Patenterteilung:
**19.04.2006 Patentblatt 2006/16**

(51) Int Cl.:
***B60R 21/01*** *(2006.01)*

(21) Anmeldenummer: **02020270.1**

(22) Anmeldetag: **11.09.2002**

(54) **Auslösevorrichtung zum Aktivieren einer Sicherheitseinrichtung eines Fahrzeugs und Verfahren zum Betrieb der Auslösevorrichtung**

Trigger device for activating a safety device in a vehicle and method for operating said trigger device

Dispositif de déclenchement d'un dispositif de sécurité dans un véhicule automobile et méthode de commande d'un tel dispositif de déclenchement

(84) Benannte Vertragsstaaten:
**CZ DE ES FR GB IT**

(30) Priorität: **26.10.2001 DE 10153015**

(43) Veröffentlichungstag der Anmeldung:
**02.05.2003 Patentblatt 2003/18**

(73) Patentinhaber: **Volkswagen Aktiengesellschaft 38436 Wolfsburg (DE)**

(72) Erfinder: **Fricke, Michael, Dr. 38350 Helmstedt (DE)**

(56) Entgegenhaltungen:
**DE-A- 10 017 084**        **DE-A- 19 807 124**
**US-A- 5 900 807**         **US-A- 6 036 224**

**Beschreibung**

Die Erfindung betrifft eine Auslösevorrichtung zum Aktivieren einer Sicherheitseinrichtung eines Fahrzeugs, insbesondere zum Schutz von dessen Insassen, mit mindestens einer in einem Peripheriebereich des Fahrzeugs angeordneten Sensoreinheit zum Erzeugen eines Messsignals, welches die Größe eines auf das Fahrzeug einwirkenden physikalischen Parameters b repräsentiert, wobei die Sensoreinheit zum Erfassen der Größe des physikalischen Parameters b in mehreren unterschiedlichen Richtungen ausgebildet ist, und mit einer Steuereinrichtung zum Erzeugen eines Steuersignals zum Aktivieren der Sicherheitseinrichtung im Ansprechen auf das Messsignal.

Die Erfindung betrifft weiterhin ein Verfahren zum Betreiben einer derartigen Auslösevorrichtung gemäß Patentanspruch 10.

Aus der DE 100 17 084 A1, die als nächstliegender Stand der Technik betrachtet wird, ist eine Steuervorrichtung für Insassanschutzmittel im Kraftfahrzeug bekannt, wobei vorzugsweise vier an den A- bzw. C-Säulen des Fahrzeuges angeordnete und ein bis drei Beschleunigungssensoren mit jeweils zueinander senkrecht stehenden Empfindlichkeitsachsen aufweisende Beschleunigungsaufnehmer vorgesehen sind. Mittels der offenbarten Anordnung werden lineare Beschleunigungen und Drehbewegungen von der Sensoreinrichtung erkannt, ohne hierfür teure Drehbewegungssensoren einzusetzen.

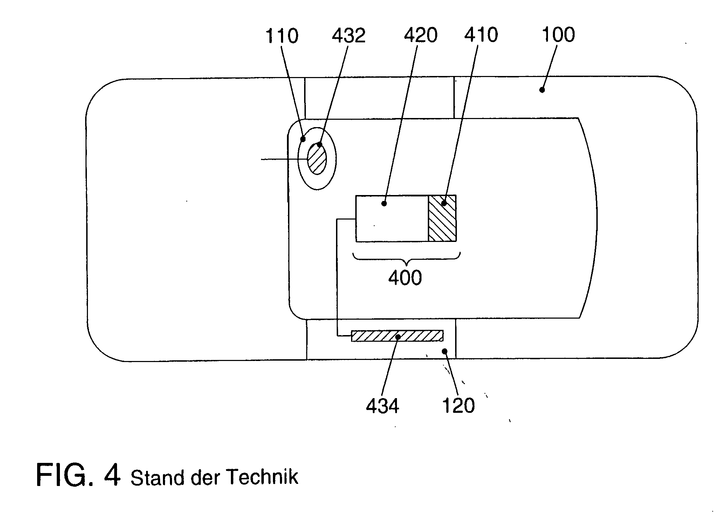

Aus der US 5,900,807 ist eine Kollisionsüberwachungsvorrichtung 400 für ein Fahrzeug 100 bekannt, wie sie in Fig. 4 dargestellt ist. Die Kollisionsüberwachungsvorrichtung 400 umfaßt eine Steuereinrichtung 420 zum Auslösen von Airbags, insbesondere einem Airbag 432 im Lenkrad 110 des Fahrzeugs 100 oder einem Seitenairbag 434 in einer Tür 120 des Fahrzeugs, im Ansprechen auf ein Steuersignal. Das Steuersignal wird aus einem von einer Sensoreinheit 410 bereitgestellten Beschleunigungssignal dadurch ermittelt, daß von diesem Beschleunigungssignal zunächst die Komponenten des Beschleunigungsvektors bezüglich unterschiedlicher Richtungen ermittelt und die Komponenten danach jeweils durch Integration geglättet werden. Die so ermittelten Beschleunigungskomponenten werden nachfolgend dahingehend ausgewertet, ob - und wenn ja - welcher von einer Vielzahl von Airbags in einem konkreten Einzelfall jeweils ausgelöst werden soll. Die Sensoreinheit 410 erfasst die Beschleunigung des Fahrzeugs in mehreren Richtungen und ist zentral in dem Fahrzeug 100 angeordnet.

Einer derartigen zentralen Anordnung des Beschleunigungssensors im Fahrzeug haftet der Nachteil an, daß der Beschleunigungssensor fernab von der eigentlichen Verformungszone bei einem Unfall angeordnet ist und deshalb eine auftretende

Beschleunigung des Fahrzeugs erst mit einer gewissen Zeitverzögerung registriert werden kann.

Um diesen Nachteil zu umgehen, sind im Stand der Technik so genannte ausgelagerte Sensoren oder Satellitensensoren bekannt, welche nicht zentriert im Innem, sondern im Peripheriebereich des Fahrzeugs angeordnet sind.

Die im Stand der Technik verwendeten Satellitensensoren sind jedoch nur für eine eindimensionale Sensierung, z.B. in Richtung der Fahrzeuglängsachse, ausgelegt. Eine aussagekräftige, d.h. unverfälschte Auswertung der Meßsignale ist dann nur möglich, wenn die durch einen Unfall in das Fahrzeug eingeleiteten Kräfte oder Beschleunigungen durch die Fahrzeugstruktur genau in der Richtung, in welcher der Sensor sensibel ist, an den Ort des Sensors übertragen werden; nur dann ist insbesondere ein Rückschluß auf den Gesamtbetrag einer äußeren Krafteinwirkung möglich.

Diese notwendige Voraussetzung für eine aussagekräftige Messung ist jedoch aufgrund der Inkompatibilität, d.h. z.B. der unterschiedlichen Höhen von Stoßfängem, von Längsträgern oder von Kühlerquerträgern, heutiger Fahrzeuge, insbesondere bei Nutzfahrzeugen oder Trucks, in den meisten Fällen nicht gewährleistet. Vielmehr besteht bei einem Unfall, insbesondere bei einem Unfall mit Mehrfachkolllisionen, die Gefahr, daß sich der Satelliten-Beschleunigungssensor aufgrund seiner exponierten Anordnung in einem Peripheriebereich des Fahrzeugs aus seiner ursprünglich vorgesehenen Sensierungsrichtung herausdreht und zwar bevor ein zur Auslösung einer Sicherheitseinrichtung relevanter Beschleunigungswert vom dem Beschleunigungssensor erfaßt und nachfolgend ausgewertet wurde. Das Herausdrehen des eindimensionalen Sensors aus seiner ursprünglichen Sensierungsrichtung ist insofern nachteilig, als das dann der Betrag der Krafteinwirkung in der ursprünglich vorgesehenen Sensierungsrichtung nicht mehr genau erfaßt wird. Weiterhin kann dann auch nicht der Gesamtbetrag der einwirkenden Kraft, die sich allgemein aus mehreren unterschiedlichen Komponenten zusammensetzen kann, erfaßt werden.

Ausgehend von diesem Stand der Technik ist es die Aufgabe der vorliegenden Erfindung, eine Auslösevorrichtung zum Aktivieren einer Sicherheitseinrichtung eines Fahrzeugs und ein Verfahren zu deren Betrieb derart weiterzubilden, daß die Auslösevorrichtung in der Lage ist, die Schwere eines Unfalls auch bei Eck- oder Seitencrashs, bei Unfällen mit Teilüberdeckung, Pfahlcrashs oder bei Mehrfachkollisionen zu erkennen und abhängig davon die Sicherheitseinrichtung bedarfsgerecht zu aktivieren.

Diese Aufgabe wird durch die in den unabhängigen Ansprüchen angegebenen Merkmale gelöst. Vorteilhafte Weiterbildungen der Erfindung sind in den Unteransprüchen angegebenen.

Die erfindungsgemäße Auslösevorrichtung zum Aktivieren einer Sicherheitseinrichtung eines Fahrzeuges enthält mindestens eine in einem Peripheriebereich des Fahrzeuges angeordnete Sensoreinheit mit einer Auswerteeinrichtung zum Erzeugen eines Messsignals durch Auswerten der Sensorsignale der Sensoreinheit, wobei die Sensorsignale darart auswertbar sind, dass ein Gesamtbetrag einer äußeren, durch den physikalischen Parameter b repräsentierbaren, Krafteinwirkung auf das Fahrzeug unabhängig von einer Einbaulage und/oder Lageveränderung der Sensoreinheit ableitbar ist.

Der Begriff "Fahrzeug" in der vorliegenden Erfindung ist weit auszulegen; neben Landfahrzeugen, d.h. insbesondere neben Automobilen, Eisenbahnen oder Modelllandfahrzeugen, schließt er auch Luftfahrzeuge, inklusive Modellflugzeuge, Wasserfahrzeuge, inklusive Modellschiffe, und Amphibienfahrzeuge oder Spielzeugfahrzeuge mit ein.

Der Begriff "Peripheriebereich" bezeichnet neben dem Dach oder dem Boden insbesondere auch den Seiten-, Front - oder Heckbereich des Fahrzeugs und dessen Ecken. Er meint insbesondere nicht einen Ort zentriert im Innern des Fahrzeugs, sondern stattdessen in der Nähe von dessen Oberfläche.

Der Begriff "Sicherheitseinrichtung" bezeichnet im weitesten Sinne ein beliebiges Sicherheits- oder Steuersystem des Fahrzeugs, welches im Falle einer äußeren Krafteinwirkung auf das Fahrzeug aktivierbar ist oder selber in irgendeiner Weise reagiert, z.B. ein Airbag, die Fahrdynamikregelung, das Anti-Blockiersystem ABS oder ein Notrufsystem etc..

Bei der erfindungsgemäßen mehrdimensionalen Ausbildung der Sensoreinheit ist gewährleistet, daß nicht nur eine, sondern mehrere Komponenten bzw. Richtungen des physikalischen vektoriellen Parameters b erfaßt werden. Mit dieser Kenntnis ist eine genaue Erkennung der Unfallschwere, das heißt eine zuverlässige Abschätzung des Gesamtbetrages der äußeren Krafteinwirkung, welche durch den Parameter b repräsentiert wird, auf das Fahrzeug auch dann möglich, wenn sich der mehrdimensionale Sensor aufgrund dieser Krafteinwirkung aus seiner ursprünglichen Einbaulage herausgedreht hat. Vorteilhafterweise brauchen die mehrdimensionalen Sensoren bei ihrem Einbau im Peripheriebereich nicht mehr genau ausgerichtet zu werden, sie sind vielmehr lageunabhängig. Dadurch können Montagekosten eingespart werden.

Weil der physikalische Parameter b die Unfallschwere und damit die Größe der äußeren Krafteinwirkung repräsentieren soll, handelt es sich bei ihm vorzugsweise um die Beschleunigung oder die Kraft.

Die mehrdimensionale Ausbildung der Sensoren im Peripheriebereich des Fahrzeugs erlaubt insbesondere eine genaue Feststellung der Unfallschwere auch bei Eck- oder Seitencrashs, bei Unfällen mit Teilüberdeckung und Pfahlcrashs oder bei Mehrfachkollisionen.

Weitere Vorteile ergeben sich bei so genannten Unterfahrunfällen, bei denen die X-Komponente der Verzögerung erst sehr spät ein deutliches Signal liefert, während Z- und Y-Komponente zeitlich früher einsetzen; auch in diesen Fällen werden alle Komponenten des Parameters erfasst.

Die völlige Unabhängigkeit der Funktionsfähigkeit der Auslösevorrichtung von der Ausrichtung des Sensors bewirkt automatisch auch eine Unabhängigkeit von dem jeweiligen Beladungszustand des Kraftfahrzeugs. Dies ist insbesondere bei einer Heckcrash-Erkennung bei schwer beladenen Fahrzeugen von Vorteil.

Eine mögliche, aber nicht zwingende Vorverarbeitung der Sensorsignale z.B. durch glättende Integration bietet den Vorteil, daß deren Auswertung erleichtert wird.

Es ist weiterhin von Vorteil, wenn als Messsignal grundsätzlich nur der Betrag b des Parameters an die Steuereinrichtung übertragen wird. Nur in Ausnahmefällen, d.h. wenn ein Schwellenwertvergleich der einzelnen Komponenten des Vektors ergibt, daß eine für die Insassen des Fahrzeugs gefährliche Situation bzw. ein Unfall vorliegt, ist es stattdessen vorteilhaft, daß die einzelnen Komponenten des Parameters anstelle von dessen Betrag als Messsignal an die Steuereinrichtung übertragen werden. Auf diese Weise wird die im Normalfall, d.h. wenn sich kein Unfall ereignet hat, zu übertragende Datenmenge lediglich auf den Betrag des Parameters reduziert.

Als physikalische Parameter werden erfindungsgemäß insbesondere die positive oder negative Beschleunigung des Fahrzeugs, dessen Dreh- oder Verformungswinkel und/oder dessen Drehrate, d.h. dessen Winkelgeschwindigkeit pro Zeiteinheit, von einer entsprechend ausgebildeten Sensoreinheit, insbesondere bei einem Unfall erfasst.

Zur Abdeckung des gesamten Peripheriebereiches sind in dem Fahrzeug vorteilhafterweise eine Vielzahl von Sensoreinheiten innerhalb des Peripheriebereiches des Fahrzeugs an unterschiedlichen Orten verteilt angeordnet.

Die oben genannte Aufgabe wird weiterhin durch das in Patentanspruch 10 beanspruchte Verfahren zum Betreiben einer Auslösevorrichtung zum Aktivieren einer Sicherheitsvorrichtung eines Fahrzeugs gelöst. Die Vorteile dieses Verfahrens entsprechen den für die Auslösevorrichtung genannten Vorteilen.

Der Beschreibung sind insgesamt vier Figuren beigefügt, wobei

Fig. 1 ein Fahrzeug mit einer erfindungsgemäßen Anordnung von Sensoreinheiten;

Fig. 2 eine Auslösevorrichtung mit Sensoreinheit gemäß der vorliegenden Erfindung;

Fig. 3 ein Verfahren zum Auswerten von erfassten Beschleunigungssignalen gemäß der vorliegenden Erfindung; und

Fig. 4 ein Fahrzeug mit einer Sensoranordnung gemäß dem Stand der Technik zeigen.

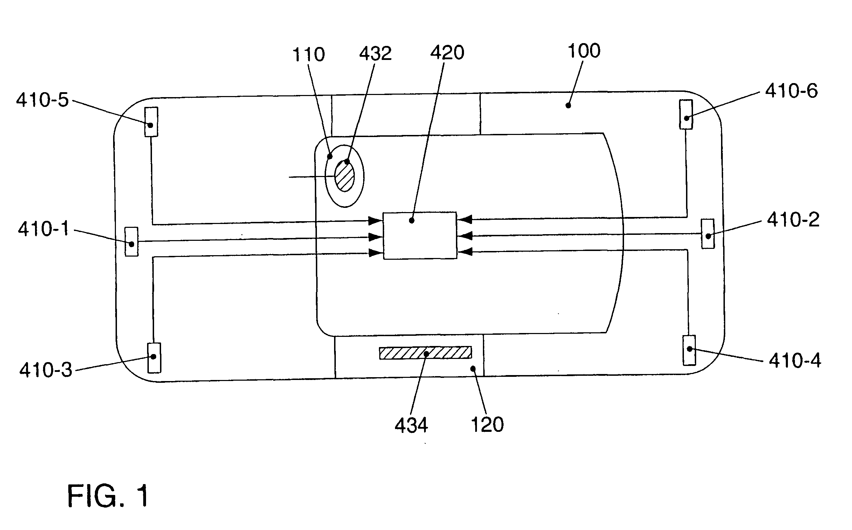

Es folgt eine detaillierte Beschreibung bevorzugter Ausführungsbeispiele der Erfindung unter Bezugnahme auf die Fig. 1 bis 3, wobei die Sensoreinheiten 410-n mit n=1...N jeweils beispielhaft als Beschleunigungssensoreinheiten ausgebildet sind und als physikalischen Parameter b die Beschleunigung des Fahrzeugs 100 in unterschiedlichen Richtungen erfassen.

Fig. 1 zeigt im wesentlichen ein bekanntes Fahrzeug, wie es oben unter Bezugnahme auf Fig. 4 beschrieben wurde. Gleiche Bezugszeichen bezeichnen gleiche Komponenten.

Im Unterschied zu dem in Fig. 4 dargestellten Fahrzeug sind bei dem erfindungsgemäßen in Fig. 1 dargestellten Fahrzeug eine Vielzahl von Beschleunigungssensoreinheiten 410-n mit n=1-6 im Peripheriebereich, also an oder in der Nähe der Oberfläche des Fahrzeugs angeordnet. Erfindungsgemäß sind diese auch nicht nur eindimensional, sondern jeweils mehrdimensional, d.h. sensitiv für mehrere Richtungen ausgebildet. Wie in Fig. 1 beispielhaft gezeigt, sind die Beschleunigungssensoreinheiten vorteilhafterweise nicht nur mittig im Front- oder Heckbereich, wie die Beschleunigungssensoreinheiten 410-1 und 410-2, sondern auch in den Ecken des Fahrzeugs, wie die Beschleunigungssensoreinheiten 410-3, ..., 410-6, angeordnet. Auf diese Weise ist sichergestellt, daß in all den genannten Bereichen eine optimale Erfassung eines Beschleunigungsvektors, insbesondere bei einem Unfall, erfolgen kann.

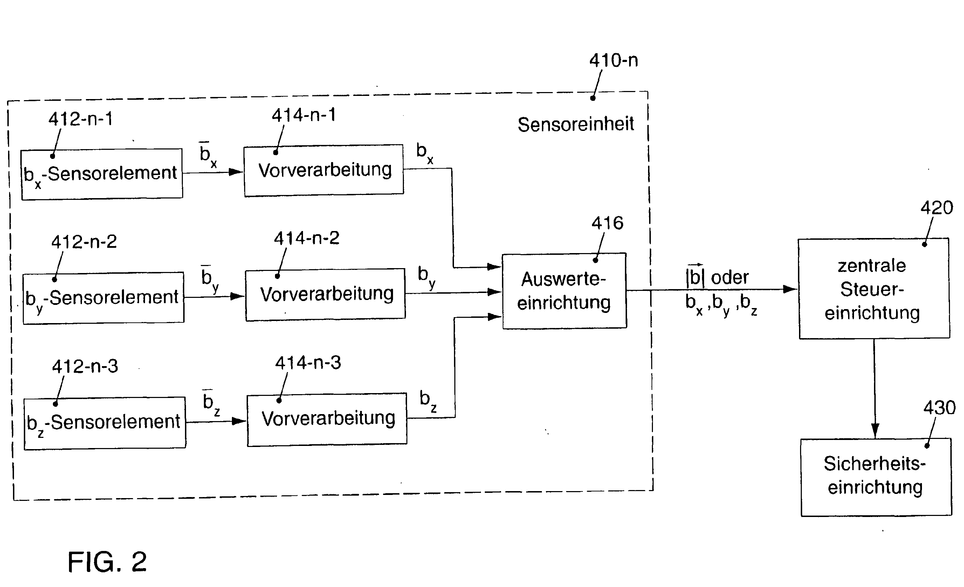

Fig. 2 zeigt den detaillierten Aufbau einer erfindungsgemäßen Auslösevorrichtung zum Aktivieren einer Sicherheitseinrichtung 430 des Fahrzeugs 100 zum Schutz von dessen Insassen. Mit Sicherheitseinrichtungen sind z.B. die in den Fig. 1 und 4 dargestellten Airbags 432 oder 434 gemeint.

Gemäß Fig. 2 umfaßt eine der erfindungsgemäßen Beschleunigungssensoreinheiten 410-n mit n = 1-N eine Mehrzahl von Beschleunigungssensorelementen 412-n-1, ..., 412-n-3 zum Erzeugen von Sensorsignalen $\overline{b}_x$, $\overline{b}_y$ und $\overline{b}_z$, welche die Beschleunigung des Fahrzeugs in jeweils einer anderen Richtung repräsentieren. Die Beschleunigungssensorelemente 412-n-1, ..., 412-n-3 sind entweder in der Beschleunigungssensoreinheit 410-n integriert oder separat und räumlich getrennt voneinander angeordnet und zu einer Beschleunigungseinheit zusammen gefasst. Die einzelnen Beschleunigungselemente können unter beliebigen Winkeln, gespreizt zur Seite und/oder nach oben, insbesondere jedoch als Dreibein oder als Zweibein, im Raum angeordnet sein. Jedes dieser Beschleunigungssensorsignale $\overline{b}_x$, $\overline{b}_y$ und $\overline{b}_z$ wird nachfolgend einer Vorverarbeitungseinheit 414-n-1, ..., 414-n-3 zugeführt, in welcher es vorzugsweise gefiltert, durch Integration geglättet und digitalisiert wird. Die jeweils an den Ausgängen der Vorverarbeitungseinheiten 414-n-1, ..., 414-n-3 bereitstehenden vorverarbeiteten Beschleunigungssignale $b_x$, $b_y$ und $b_z$ werden nachfolgend einer Auswerteeinrichtung 416 zwecks Schwellenwertvergleich zugeführt.

In Abhängigkeit vom Ergebnis der Auswertung des Schwellenwertvergleiches erzeugt die Auswerteeinrichtung 416 ein Messsignal zwecks Übertragung an eine zentrale Steuereinrichtung 420 für die Sicherheitseinrichtung 430. Die Steuereinrichtung 420 erzeugt ein Steuersignal zur Ansteuerung der Sicherheitseinrichtung 430 nach Maßgabe durch das Messsignal.

Alternativ zu der beschriebenen Vorverarbeitung und Auswertung der Beschleunigungssensorsignale $\overline{b}_x$, $\overline{b}_y$ und $\overline{b}_z$ in den Vorverarbeitungseinheiten 414-n-1, ..., 414-n-3 und der Auswerteeinrichtung 446 können die Beschleunigungssensorsignale $\overline{b}_x$, $\overline{b}_y$ und $\overline{b}_z$ auch direkt an die zentrale Steuereinrichtung 420 übertragen und dort ausgewertet werden.

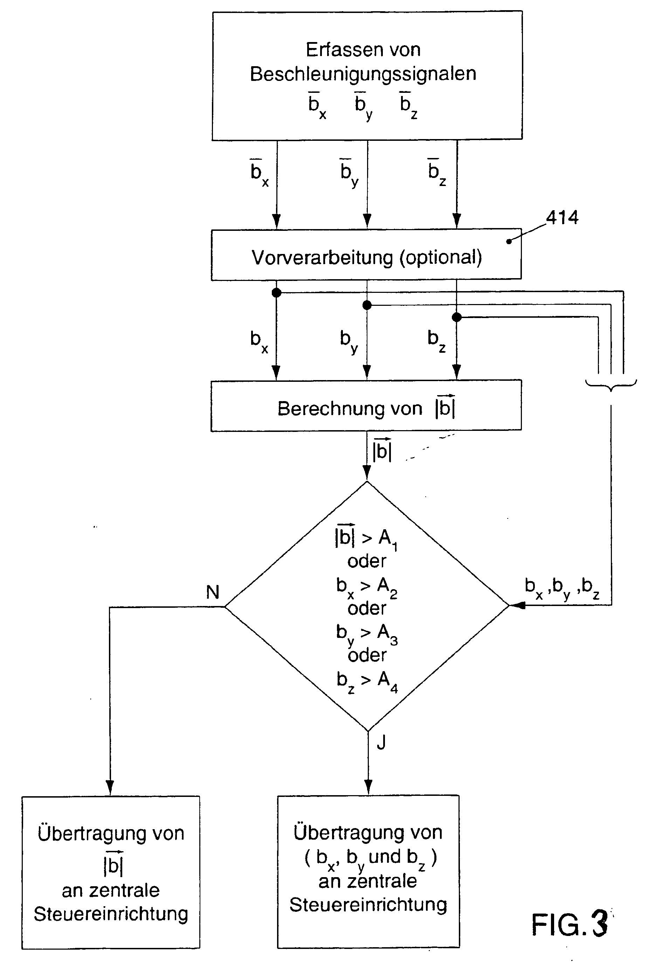

Fig. 3 zeigt ein Flussdiagramm, in welchem die Funktionsweise der Auswerteeinrichtung 416 näher erläutert ist. Demnach werden die an den Ausgängen der Vorverarbeitungseinheiten 414-n-1, ..., 414-n-3 bereitgestellten vorverarbeiteten Beschleunigungssignale $b_x$, $b_y$ und $b_z$ in der Auswerteeinrichtung 416 zunächst zur Berechnung des Betrages $\left|\vec{b}\right|$ des Beschleunigungsvektors $\vec{b}$ verwendet. Die Berechnung eines Betrages eines Vektors aus seinen Komponenten ist in der Mathematik grundsätzlich bekannt; der Betrag des Beschleunigungsvektors $\left|\vec{b}\right|$ berechnet sich für den Fall, daß die Richtungen seiner einzelnen erfassten Komponenten alle senkrecht zueinander stehen, gemäß folgender Formel:

$$|b| = \sqrt{\left(b_x\right)^2 + \left(b_y\right)^2 + \left(b_z\right)^2} \quad . \qquad\qquad (1)$$

Nachfolgend wird sowohl der berechnete Betrag des Beschleunigungsvektors $\left|\vec{b}\right|$ wie auch die vorverarbeiteten Komponenten des Beschleunigungsvektors $b_x$, $b_y$ und $b_z$ oder aber, alternativ dazu, auch die ursprünglich erfassten Komponenten des Beschleunigungsvektors $\overline{b}_x$, $\overline{b}_y$ und $\overline{b}_z$ einem Schwellenwertvergleich unterzogen, d.h. sie werden jeweils mit einem vorgegebenen individuellen Schwellenwert verglichen. Erfindungsgemäß werden die individuell durchgeführten Schwellenwertvergleiche in einer bool'schen Gleichung 2 zusammengefasst, wobei die Gleichung 2 wie folgt lautet:

$$G = \{\ |b| > A1 \ \text{oder} \ b_x > A2 \ \text{oder} \ b_y > A3 \ \text{oder} \ b_z > A4\} \tag{2}$$

wobei G eine bool'sche Variable und A1, A2, A3 und A4 jeweils einen voreingestellten Schwellenwert repräsentieren. Die Schwellenwerte sind so gewählt, daß eine Überschreitung von zumindest einem dieser Werte durch die zugehörige Beschleunigungskomponente eine für die Insassen des Fahrzeugs gefährliche Situation repräsentiert.

Die Auswerteeinrichtung 416 ist erfindungsgemäß so ausgebildet, daß, wenn die bool'sche Variable G logisch falsch ist, sie als Messsignal lediglich den Betrag des Beschleunigungsvektor $\vec{b}$ an die zentrale Steuereinheit 420 überträgt. Diese Situation entspricht typischerweise einer normalen, d.h. für die Insassen unkritischen, Bewegungssituation des Fahrzeugs. Wenn jedoch demgegenüber die bool'sche Variable G wahr ist, d.h. wenn der Betrag des Beschleunigungsvektors |b| oder eine seiner Komponenten den zugehörigen voreingestellten Schwellenwert überschreitet, dann besteht für die Insassen des Fahrzeugs eine kritische Beschleunigungssituation und in diesem Fall ist die Auswerteeinrichtung 416 ausgebildet, als Messsignal alle Komponenten des Beschleunigungsvektors in Form eines Dupels ($b_x$, $b_y$) oder eines Tripels ($b_x$, $b_y$, $b_z$) an die Steuereinrichtung 420 zu übertragen. Aufgrund der Information über die Größe der einzelnen Komponenten des Beschleunigungsvektors ist die zentrale Steuereinrichtung 420 dann in der Lage, nicht nur dessen Betrag, sondern auch die Richtung oder ggf. auch Richtungsänderungen zu erkennen oder andere Plausibilitätsprüfungen durchzuführen und somit eine genauere Analyse und Auswertung der kritischen Situation vorzunehmen. Je nach Maßgabe der einzelnen Komponenten entscheidet die zentrale Steuereinheit 420 dann im Einzelfall, welche von verschiedenen verfügbaren Sicherheitseinrichtungen 430 aktiviert werden sollen.

Die Übertragung der Beträge der einzelnen Komponenten des Beschleunigungsvektors $b_x$, $b_y$ und $b_z$ erfordert einen größeren Aufwand als die Übertragung von lediglich dem Betrag des Beschleunigungsvektors. Die erfindungsgemäß vorgesehene Auswertung der bool'schen Gleichung 2 und die damit einhergehende Fallunterscheidung bei der Ausbildung des Messsignals gewährleistet vorteilhafterweise eine Verringerung der an die Steuereinheit 420 übertragenen Datenmenge. Im Normalfall wird lediglich der Betrag des Beschleunigungsvektors von der Auswerteeinrichtung 416 an die zentrale Steuereinrichtung 420 übertragen und nur in Ausnahmefällen wird, wie im letzten Absatz beschrieben, die erhöhte Datenmenge, bestehend aus sämtlichen Komponenten des Beschleunigungsvektors, an die zentrale Steuereinheit 420 übertragen. Durch die detailliertere Information über die Beträge der einzelnen Komponenten erhält ein weiterer in der zentralen Steuereinrichtung 420 ausgeführter Auswertealgorithmus zusätzliche wertvolle Informationen über die Richtung einer beginnenden Deformation bei einem Crash; die Bestimmung der Unfallschwere und die Charakterisierung des Crashs als Pfahl-Unfall mit Teilüberdeckung oder als Winkelcrash wird dadurch erleichtert.

**BEZUGSZEICHENLISTE**

| | |
|---|---|
| 100 | Fahrzeug |
| 110 | Lenkrad |
| 120 | Tür |
| 400 | Kollisionsüberwachungsvorrichtung |
| 410-n | Sensoreinheit |
| 412-n-1, ..., 412-n-3 | Sensorelement |
| 414-n-1, ..., 414-n-3 | Vorverarbeitungseinheit |
| 416 | Auswerteeinrichtung |
| 420 | Steuereinrichtung |
| 430 | Sicherheitseinrichtung |
| 432 | Airbag |
| 434 | Seitenairbag |

**Patentansprüche**

1. Auslösevorrichtung zum Aktivieren einer Sicherheitseinrichtung (430) eines Fahrzeugs (100), insbesondere zum Schutz von dessen Insassen, mit

mindestens einer in einem Peripheriebereich des Fahrzeugs (100) angeordneten Sensoreinheit (410-n, n = 1...N) zum Erzeugen eines Messsignals, welches die Größe eines auf das Fahrzeug einwirkenden physikalischen Parameters b repräsentiert; wobei die Sensoreinheit (410-n, n = 1...N) zum Erfassen der Größe des physikalischen Parameters b in mehreren unterschiedlichen Richtungen ausgebildet ist,

und einer Steuereinrichtung (420) zum Erzeugen eines Steuersignals zum Aktivieren der Sicherheitseinrichtung (430) im Ansprechen auf das Messsignal,

**dadurch gekennzeichnet, dass**

die Sensoreinheit (410-n, n = 1...N) eine Auswerteeinrichtung (416) zum Erzeugen des Messsignals durch Auswerten der Sensorsignale der Sensoreinheit (410-n, n = 1...N) aufweist, wobei die Sensorsignale derart auswertbar sind, dass ein Gesamtbetrag einer äußeren, durch den physikalischen Parameter b repräsentierbaren, Krafteinwirkung auf das Fahrzeug (100) unabhängig von einer Einbaulage und/oder einer Lageveränderung der Sensoreinheit (410-n, n = 1...N) ableitbar ist.

2. Auslösevorrichtung nach Anspruch 1,
   **dadurch gekennzeichnet, dass**
   die Sensoreinheit (410-n, n = 1...N) eine Mehrzahl von in der Sensoreinheit integrierten Sensorelementen (412-n-1, ..., 412-n-3) aufweist zum Erzeugen von Sensorsignalen, welche die Größe des physikalischen Parameters b in jeweils einer anderen Richtung repräsentieren.

3. Auslösevorrichtung nach Anspruch 1,
   **dadurch gekennzeichnet, dass**
   die Sensoreinheit (410-n, n=1-N) eine Mehrzahl von separaten und räumlich getrennt angeordneten Sensorelementen (412-n-1, ..., 412-n-3) aufweist zum Erzeugen von Sensorsignalen, welche die Größe des physikalischen Parameters b in jeweils einer anderen Richtung repräsentieren.

4. Auslösevorrichtung nach einem Ansprüche 2 oder 3,
   **dadurch gekennzeichnet, dass**
   die Auswerteeinrichtung (416) ausgebildet ist zum Erzeugen des Messsignals, indem sie die einzelnen Sensorsignale einem Schwellenwertvergleich unterzieht.

5. Auslösevorrichtung nach Anspruch 4,
   **dadurch gekennzeichnet, dass**
   der physikalische Parameter b eine Vektorgröße ist;
   die Sensoreinheit (410-n) drei Sensorelemente aufweist, wobei die von diesen Sensorelementen (412-n-1, ..., 412-n-3) erzeugten drei Sensorsignale die Größe der senkrecht zueinander stehenden Komponenten $b_x$, $b_y$ und $b_z$ des physikalischen Parameters b in einer vorgegebenen x-, y- und z-Richtung repräsentieren;
   und die Auswerteeinrichtung (416) ausgebildet ist,

   a) den Betrag des physikalischen Parameters b gemäß folgender Formel zu berechnen:

$$|b| = \sqrt{\left(b_x\right)^2 + \left(b_y\right)^2 + \left(b_z\right)^2} \quad ;$$

   b) weiterhin folgende bool'sche Gleichung zu berechnen:

$$G = \{\ |b| > A1\ \text{oder}\ b_x > A2\ \text{oder}\ b_y > A3\ \text{oder}\ b_z > A4\ \},$$

   wobei G eine bool'sche Variable und A1, A2, A3 und A4 jeweils einen voreingestellten Schwellenwert repräsentieren; und
   c1) wenn G logisch falsch ist, dann als Messsignal lediglich |b| an die Steuereinrichtung (420) zu übertragen; oder
   c2) wenn G logisch wahr ist, dann als Messsignal alle Komponenten $b_x$, $b_y$ und $b_z$ des physikalischen Parameters b an die Steuereinrichtung (420) zu übertragen.

6. Auslösevorrichtung nach einem der vorangegangenen Ansprüche,
   **dadurch gekennzeichnet, dass**

die Sensoreinheit (410-n) zumindest eine Vorverarbeitungseinheit (414) aufweist zum Vorverarbeiten, der von den Sensorelementen (412-n-1, ..., 412-n-3) bereitgestellten Sensorsignalen, bevor diese der Auswerteeinrichtung (416) zugeführt werden.

7. Auslösevorrichtung nach einem der vorangegangenen Ansprüche,
**dadurch gekennzeichnet, dass**
die Sensoreinheit (410) als Beschleunigungssensoreinheit ausgebildet ist zum Erfassen der Beschleunigung des Fahrzeugs (100) als physikalischem Parameter;
oder die Sensoreinheit (410) als Drehratensensoreinheit ausgebildet ist zum Erfassen der Drehrate des Fahrzeugs (100) als physikalischem Parameter;
oder die Sensoreinheit (410) als Winkelsensoreinheit ausgebildet ist zum Erfassen des Drehwinkels des Fahrzeugs (100) als physikalischem Parameter.

8. Fahrzeug (100) mit einer Sicherheitsvorrichtung (430), insbesondere zum Schutz von dessen Insassen, wobei die Sicherheitseinrichtung (430) durch eine Auslösevorrichtung gemäß einem der Ansprüche 1-7 aktivierbar ist.

9. Fahrzeug (100) nach Anspruch 8,
**dadurch gekennzeichnet, dass**
es verteilt in seinem Peripheriebereich eine Vielzahl mehrdimensional sensitiver Sensoren aufweist.

10. Verfahren zum Betreiben einer Auslösevorrichtung zum Aktivieren einer Sicherheitseinrichtung (430) eines Fahrzeugs (100), welche insbesondere zum Schutz von dessen Insassen dient, mit folgenden Schritten:

- Erfassen eines physikalischen Parameters b im Peripheriebereich des Fahrzeugs (100) in mehreren vorbestimmten Richtungen;
- Erzeugen von Sensorsignalen, welche die Größe des physikalischen Parameters b in jeweils einer anderen Richtung repräsentieren;
- Auswerten des Parameters im Hinblick darauf, ob eine für die Insassen des Fahrzeugs gefährliche Situation vorliegt;
- Ansteuern der Sicherheitseinrichtung (430) nach Maßgabe durch das Ergebnis der Auswertung;

**dadurch gekennzeichnet, dass**
die Sensorsignale derart auswertbar sind und/oder ausgewertet werden, dass ein Gesamtbetrag einer äußeren, durch den physikalischen Parameter b repräsentierbaren, Krafteinwirkung auf das Fahrzeug (100) unabhängig von einer Einbaulage und/oder einer Lageveränderung der Sensoreinheit (410-n, n=1...N) ableitbar ist und/oder abgeleitet wird.

11. Verfahren nach Anspruch 10,
**dadurch gekennzeichnet, dass**
der physikalische Parameter eine Vektorgröße $\vec{b}$ ist und die Auswertung der Komponenten des Vektors folgende Schritte umfasst:

- Berechnen des Betrages |b| des Vektors $\vec{b}$ aus dessen erfassten Komponenten $b_x$, $b_y$ und/oder $b_z$;
- Berechnen folgender bool'schen Gleichung:

$$G = \{ |b| > A1 \text{ oder } b_x > A2 \text{ oder } b_y > A3 \text{ oder } b_z > A4 \},$$

wobei G eine bool'sche Variable und A1, A2, A3 und A4 jeweils einen voreingestellten Schwellenwert repräsentieren; und

- Übertragen des Betrages |b| des Vektors $\vec{b}$ an die Steuereinrichtung, wenn G logisch falsch ist; oder
- Übertragen aller erfassten Komponenten $b_x$, $b_y$ und/oder $b_z$ des Vektors an die Steuereinheit, wenn G logisch wahr ist.

**Claims**

1.  Triggering apparatus for activating a safety device (430) of a vehicle (100), in particular for protecting the occupants of the said vehicle, having

    at least one sensor unit (410-n, n=1...N) which is arranged in a peripheral region of the vehicle (100) and serves to generate a measurement signal which represents the magnitude of a physical parameter b which acts on the vehicle; with the sensor unit (410-n, n=1...N) being designed to detect the magnitude of the physical parameter b in a plurality of different directions,

    and a control device (420) for generating a control signal for activating the safety device (430) in response to the measurement signal,

    **characterized in that**

    the sensor unit (410-n, n=1...N) has an evaluation device (416) for generating the measurement signal by evaluating the sensor signals from the sensor unit (410-n, n=1...N), it being possible to evaluate the sensor signals in such a way that a total value of an external action of force on the vehicle (100), which action of force may be represented by the physical parameter b, can be derived independently of an installation position and/or a change in position of the sensor unit (410-n, n=1...N).

2.  Triggering apparatus according to Claim 1,

    **characterized in that**

    the sensor unit (410-n, n=1...N) has a plurality of sensor elements (412-n-1, ..., 412-n-3), which are integrated in the sensor unit, for generating sensor signals which represent the magnitude of the physical parameter b in a different direction in each case.

3.  Triggering apparatus according to Claim 1,

    **characterized in that**

    the sensor unit (410-n, n=1...N) has a plurality of sensor elements (412-n-1, ..., 412-n-3), which are separate and are arranged to be spatially segregated, for generating sensor signals which represent the magnitude of the physical parameter b in a different direction in each case.

4.  Triggering apparatus according to either Claim 2 or 3,

    **characterized in that**

    the evaluation device (416) is designed to generate the measurement signal by comparing the individual sensor signals with a threshold value.

5.  Triggering apparatus according to Claim 4,

    **characterized in that**

    the physical parameter b is a vector variable;

    the sensor unit (410-n) has three sensor elements, the three sensor signals which are generated by these sensor elements (412-n-1, ..., 412-n-3) representing the magnitude of the components $b_x$, $b_y$ and $b_z$, which are perpendicular to one another, of the physical parameter b in a prespecified x-, y- and z-direction;

    and the evaluation device (416) is designed

    a) to calculate the value of the physical parameter b in accordance with the following formula:

    $$\left| b \right| = \sqrt{\left( b_x \right)^2 + \left( b_y \right)^2 + \left( b_z \right)^2} \; ;$$

    b) also to calculate the following Boolean equation:

    $$G = \left\{ \left| b \right| > A1 \; or \; b_x > A2 \; or \; b_y > A3 \; or \; b_z > A4 \right\} ,$$

    where G is a Boolean variable and A1, A2, A3 and A4 each represent a preset threshold value; and
    c1) to transmit only |b| to the control device (420) as a measurement signal when G is logically false; or
    c2) to transmit all of the components $b_x$, $b_y$ and $b_z$ of the physical parameter b to the control device (420) as a measurement signal when G is logically true.

6. Triggering apparatus according to one of the preceding claims,
**characterized in that**
the sensor unit (410-n) has at least one preprocessing unit (414) for preprocessing the sensor signals, which are provided by the sensor elements (412-n-1, ..., 412-n-3), before the said signals are supplied to the evaluation device (416).

7. Triggering apparatus according to one of the preceding claims,
**characterized in that**
the sensor unit (410) is in the form of an acceleration sensor unit for detecting the acceleration of the vehicle (100) as a physical parameter;
or the sensor unit (410) is in the form of a rotation rate sensor unit for detecting the rotation rate of the vehicle (100) as a physical parameter;
or the sensor unit (410) is in the form of an angle sensor unit for detecting the angle of rotation of the vehicle (100) as a physical parameter.

8. Vehicle (100) having a safety apparatus (430), in particular for protecting the occupants of the said vehicle, it being possible to activate the safety device (430) by means of a triggering apparatus according to one of Claims 1-7.

9. Vehicle (100) according to Claim 8,
**characterized in that**
it has a large number of sensors, which are sensitive in two or more dimensions, distributed in its peripheral region.

10. Method for operating a triggering apparatus for activating a safety device (430) of a vehicle (100), which device serves particularly to protect the occupants of the said vehicle, comprising the following steps:

- detecting a physical parameter b in the peripheral region of the vehicle (100) in a plurality of predetermined directions;
- generating sensor signals which represent the magnitude of the physical parameter b in a different direction in each case;
- evaluating the parameter with regard to whether the occupants of the vehicle are in a dangerous situation;
- actuating the safety device (430) according to the result of the evaluation;

**characterized in that**
the sensor signals can be and/or are evaluated in such a way that a total value of an external action of force on the vehicle (100), which action of force may be represented by the physical parameter b, can be and/or is derived independently of an installation position and/or a change in position of the sensor unit (410-n, n=1...N).

11. Method according to Claim 10,
**characterized in that**
the physical parameter is a vector variable $\vec{b}$, and the evaluation of the components of the vector comprises the following steps:

- calculating the value |b| of the vector $\vec{b}$ from its detected components $b_x$, $b_y$ and/or $b_z$;
- calculating the following Boolean equation:

$$G = \left\{ |b| > A1 \ or \ b_x > A2 \ or \ b_y > A3 \ or \ b_z > A4 \right\},$$

where G is a Boolean variable and A1, A2, A3 and A4 each represent a preset threshold value; and

- transmitting the value |b| of the vector $\vec{b}$ to the control device when G is logically false; or
- transmitting all of the detected components $b_x$, $b_y$ and/or $b_z$ of the vector to the control unit when G is logically true.

**Revendications**

1. Dispositif de déclenchement pour activer un dispositif de sécurité (430) d'un véhicule (100), en particulier pour la protection de ses occupants, comportant au moins une unité de détection (410-n, n = 1...N) disposée dans une zone périphérique du véhicule (100) pour générer un signal de mesure, lequel représente la grandeur d'un paramètre physique b agissant sur le véhicule, l'unité de détection (410-n, n = 1...N) étant conformée dans plusieurs directions différentes pour détecter la grandeur du paramètre physique b, et un dispositif de commande (420) pour générer un signal de commande destiné à activer le dispositif de sécurité (430) en réponse au signal de mesure, **caractérisé en ce que** l'unité de détection (410-n, n = 1...N) présente un dispositif d'évaluation (416) pour générer le signal de mesure par évaluation des signaux de détection de l'unité de détection (410-n, n = 1...N), les signaux de détection pouvant être évalués de telle sorte qu'une somme globale d'une force extérieure pouvant être représentée par le paramètre physique b agissant sur le véhicule (100) puisse être dérivée indépendamment d'une position de montage et/ou d'un changement de position de l'unité de détection (410-n, n = 1...N).

2. Dispositif de déclenchement selon la revendication 1, **caractérisé en ce que** l'unité de détection (410-n, n = 1...N) présente une pluralité d'éléments de détection (412-n-1), ..., 412-n-3) intégrés dans l'unité de détection, destinés à générer des signaux de détection, lesquels représentent la grandeur du paramètre physique b dans chaque fois une autre direction.

3. Dispositif de déclenchement selon la revendication 1, **caractérisé en ce que** l'unité de détection (410-n, n = 1...N) présente une pluralité d'éléments de détection (412-n-1, ..., 412-n-3) disposés de façon séparée et à distance dans l'espace, destinés à générer des signaux de détection, lesquels représentent la grandeur du paramètre physique b dans chaque fois une autre direction.

4. Dispositif de déclenchement selon l'une quelconque des revendications 2 ou 3, **caractérisé en ce que** le dispositif d'évaluation (416) est conformé pour générer le signal de mesure, en soumettant les signaux de détection individuels à une comparaison par rapport à des valeurs seuils.

5. Dispositif de déclenchement selon la revendication 4, **caractérisé en ce que** le paramètre physique b est une grandeur vectorielle, l'unité de détection (410-n) présente trois éléments de détection, les trois signaux de détection générés par lesdits éléments de détection (412-n-1, ..., 412-n-3) représentant la grandeur des composantes $b_x$, $b_y$ et $b_z$ perpendiculaires les unes aux autres du paramètre physique b dans une direction x, y et z prédéfinie, et le dispositif d'évaluation (416) étant conformé pour

   a) calculer la somme du paramètre physique b selon la formule suivante :

$$|b| = \sqrt{(b_x)^2 + (b_y)^2 + (b_z)^2} \; ;$$

   b) calculer en outre l'équation booléenne suivante :

$$G = \{|b| > A1 \text{ ou } b_x > A2 \text{ ou } b_y > A3 \text{ ou } b_z > A4\},$$

   G représentant une variable booléenne et A1, A2, A3 et A4 représentant chaque fois une valeur seuil préréglée; et
   c1) lorsque G logique est faux, transmettre ensuite au dispositif de commande (420) uniquement |b| en tant que signal de mesure ; ou
   c2) lorsque G logique est vrai, transmettre ensuite au dispositif de commande (420) toutes les composantes $b_x$, $b_y$ et $b_z$ du paramètre physique b en tant que signal de mesure.

6. Dispositif de déclenchement selon l'une quelconque des revendications précédentes, **caractérisé en ce que** l'unité de détection (410-n) présente au moins une unité de prétraitement (414) pour prétraiter les signaux de détection délivrés par les éléments de détection (412-n-1, ..., 412-n-3), avant que ceux-ci soient transmis au dispositif d'évaluation (416).

7. Dispositif de déclenchement selon l'une quelconque des revendications précédentes, **caractérisé en ce que** l'unité de détection (410) est conformée en tant qu'unité de détection d'accélération pour détecter l'accélération du véhicule (100) en tant que paramètre physique, ou l'unité de détection (410) est conformée en tant qu'unité de détection de vitesse de rotation pour détecter la vitesse de rotation du véhicule (100) en tant que paramètre physique, ou l'unité de détection (410) est conformée en tant qu'unité de détection angulaire pour détecter l'angle de rotation du véhicule (100) en tant que paramètre physique.

8.  Véhicule (100) comportant un dispositif de sécurité (430), en particulier pour la protection de ses occupants, le dispositif de sécurité (430) pouvant être activé par un dispositif de déclenchement selon l'une quelconque des revendications 1 à 7.

9.  Véhicule (100) selon la revendication 8, **caractérisé en ce qu'**il présente une pluralité de détecteurs sensibles multidimensionnellement, répartis dans sa zone périphérique.

10. Procédé pour actionner un dispositif de déclenchement pour activer un dispositif de sécurité (430) d'un véhicule (100), lequel sert en particulier à la protection de ses occupants, comportant les étapes suivantes :

    - détection d'un paramètre physique b dans la zone périphérique du véhicule (100) dans plusieurs directions prédéterminées,
    - génération de signaux de détection, lesquels représentent la grandeur du paramètre physique b dans chaque fois une autre direction,
    - évaluation du paramètre afin de déterminer si une situation dangereuse pour les occupants du véhicule se présente,
    - commande du dispositif de sécurité (430) en fonction du résultat de l'évaluation,

    **caractérisé en ce que** les signaux de détection peuvent être évalués et/ou sont évaluées de telle sorte qu'une somme globale d'une force extérieure pouvant être représentée par le paramètre physique b agissant sur le véhicule (100) puisse être dérivée et/ou soit dérivée indépendamment d'une position de montage et/ou d'un changement de position de l'unité de détection (410-n, n = 1...N).

11. Procédé selon la revendication 10, **caractérisé en ce que** le paramètre physique est une grandeur vectorielle $\vec{b}$ et l'évaluation des composantes du vecteur comporte les étapes suivantes :

    - calcul de la somme |b| du vecteur $\vec{b}$ à partir de ses composantes $b_x$, $b_y$ et/ou $b_z$ détectées;
    - calcul de l'équation booléenne suivante :

$$G = \{|b| > A1 \text{ ou } b_x > A2 \text{ ou } b_y > A3 \text{ ou } b_z > A4\},$$

    G représentant une variable booléenne et A1, A2, A3 et A4 représentant chaque fois une valeur seuil préréglée; et

    - transmission de la somme |b| du vecteur $\vec{b}$ au dispositif de commande, lorsque G logique est faux; ou
    - transmission de toutes les composantes $b_x$, $b_y$ et/ou $b_z$ détectées du vecteur au dispositif de commande, lorsque G logique est vrai.

FIG. 1

420 — zentrale Steuereinrichtung

430 — Sicherheitseinrichtung

$|\vec{b}|$ oder $b_x, b_y, b_z$

410-n — Sensoreinheit

416 — Auswerteeinrichtung

$b_x$

$b_y$

$b_z$

414-n-1 — Vorverarbeitung

414-n-2 — Vorverarbeitung

414-n-3 — Vorverarbeitung

$\overline{b}_x$

$\overline{b}_y$

$\overline{b}_z$

412-n-1 — $b_x$-Sensorelement

412-n-2 — $b_y$-Sensorelement

412-n-3 — $b_z$-Sensorelement

FIG. 2

Erfassen von
Beschleunigungssignalen
$\overline{b}_x \quad \overline{b}_y \quad \overline{b}_z$

$\overline{b}_x \qquad \overline{b}_y \qquad \overline{b}_z$

414

Vorverarbeitung (optional)

$b_x \qquad b_y \qquad b_z$

Berechnung von $|\vec{b}|$

$|\vec{b}|$

$|\vec{b}| > A_1$
oder
$b_x > A_2$
oder
$b_y > A_3$
oder
$b_z > A_4$

N

J

$b_x, b_y, b_z$

Übertragung von
$|\vec{b}|$
an zentrale
Steuereinrichtung

Übertragung von
( $b_x$, $b_y$ und $b_z$ )
an zentrale
Steuereinrichtung

FIG. 3

FIG. 4 Stand der Technik